# EUROPÄISCHE PATENTANMELDUNG

(11) **EP 1 054 287 A2**
(43) Veröffentlichungstag der Anmeldung: **22.11.2000**
(21) Anmeldenummer: 00104749.7
(22) Anmeldetag: 04.03.2000
(51) Int. Cl.: G02F 1/01

(54) **Thermooptischer Modulator**

(30) Priorität: 20.05.1999 DE 19923061
(71) Anmelder: ROBERT BOSCH GMBH, 70442 Stuttgart (DE)
(72) Erfinder: Mueller-Fiedler, Roland, 71229 Leonberg (DE); Bernhard, Winfried, 70839 Gerlingen (DE)

(57) **Zusammenfassung**

Ein thermooptischer Modulator umfaßt einen Wellenleiter (1), an den in einem Schaltabschnitt (4) quer zu seiner Signallaufrichtung (14) ein Beugungsabschnitt (5) angrenzt, und ein sich am Beugungsabschnitt (5) entlang seiner Grenze (6) zum Wellenleiter (1) erstreckendes erstes Heizelement (8). Um die Signalunterdrückung beim Undurchlässigschalten des Modulators zu verbessern, ist ein zweites Heizelement (9) entlang der Grenze (6) am Wellenleiter (1) vorgesehen.

## Beschreibung

### Stand der Technik

Die Erfindung betrifft einen thermooptischen Modulator mit einem Wellenleiter, an den in einem Schaltabschnitt quer zu seiner Signallaufrichtung ein Beugungsabschnitt angrenzt, mit einem sich am Beugungsabschnitt entlang seiner Grenze zum Wellenleiter erstreckenden ersten Heizelement. Ein solcher thermooptischer Modulator wurde auf der Konferenz 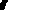 Photonics West-Optoelectronics 99" am 25.01.1999 in San José , Kalifornien, USA von W. Bernhard, R. Müller-Fiedler, T. Pertsch und C. Wächter vorgestellt. Der Vortrag wird demnächst in den Proceedings SPIE Band 3620 veröffentlicht.

Dieser bekannte Modulator beruht auf folgendem Funktionsprinzip. Eine Wellenleitermode wird durch Totalreflexion an den Begrenzungen eines Wellenleiters in einer Signallaufrichtung geführt. Dort, wo der Wellenleiter an einen Beugungsabschnitt angrenzt, entfällt - wenigstens an einer Seite des Wellenleiters - die Totalreflexion; die Mode breitet sich in den Beugungsabschnitt aus, und es kommt keine nennenswerte Lichtintensität mehr an dem Abschnitt des Wellenleiters an, wo dieser sich vom Beugungsabschnitt wieder trennt. Ein solcher Aufbau ist in seinem Ruhezustand für die Mode praktisch undurchlässig.

Um die Intensität des von dem Aufbau durchgelassenen Lichts modulieren zu können, ist der Heizabschnitt entlang der Grenze zwischen Wellenleiter und Beugungsabschnitt vorgesehen. Wird dieser Beugungsabschnitt im Grenzabschnitt erwärmt, so verringert sich der Brechungsindex dieses Abschnitts, so daß die sich auf dem Wellenleiter ausbreitende Mode auch im Beugungsabschnitt geführt bleibt und den Modulator im wesentlichen nicht oder wenig abgeschwächt durchläuft. Die Transmission des Aufbaus läßt sich somit auf einfache Weise durch Ein- und Ausschalten des Heizelements steuern.

Als Material für die Wellenleiter und den Beugungsabschnitt können Polymermaterialien eingesetzt werden, die einen ausgeprägten thermooptischen Effekt, das heißt eine starke durch Temperaturbeaufschlagung hervorgerufene Brechzahländerung aufweisen.

Diese Polymere zeigen jedoch den Effekt, daß eine durch Erwärmung induzierte Brechzahländerung nach Rücknahme der Temperaturänderung nicht wieder vollständig in den Ausgangszustand relaxiert, sondern eine kleine Brechzahländerung bestehen bleibt. Dies führt dazu, daß, wenn das Heizelement außer Betrieb genommen wird, aufgrund der zurückbleibenden Brechzahländerung ein Teil des Lichts weiterhin den Modulator durchläuft. Für technische Anwendungen, insbesondere bei integriert optischen Schaltern für optische Telekommunikationsnetze ist aber eine schnelle und vollständige Unterdrückung des zu modulierenden Signals und Abschaltung des Modulators erforderlich.

### Vorteile der Erfindung

Durch die vorliegende Erfindung wird ein thermooptischer Modulator geschaffen, der in kürzester Zeit von praktisch vollständig durchlässig auf praktisch völlig undurchlässig umgeschaltet werden kann. Zu diesem Zweck ist ein zweites Heizelement vorgesehen, das sich entlang der Grenze des Beugungsabschnitts am Wellenleiter erstreckt. Wenn dieser Modulator von einem durchlässigen in einen undurchlässigen Zustand umgeschaltet wird, so wird zum einen in herkömmlicher Weise das erste Heizelement außer Betrieb genommen, so daß sich der Grenzabschnitt des Beugungsabschnitts abkühlt und dessen Brechungsindex sich dem des angrenzend verlaufenden Wellenleiters wieder annähert. Der ursprüngliche Wert des Brechungsindex wird jedoch durch die Abkühlung allein nicht exakt wieder erreicht. Um aber eine vollständige Angleichung in kürzester Zeit herbeizuführen, kann gleichzeitig das zweite Heizelement in Betrieb genommen werden, das den Wellenleiter wenigstens in seinem an den Beugungsabschnitt angrenzenden Schaltabschnitt erwärmt. Dies führt zu einer Verringerung des Brechungsindex des Wellenleiters im Schaltabschnitt. Sobald dieser Brechungsindex den des Grenzabschnitts des Beugungsabschnitts erreicht oder unterschreitet, kann sich das Licht wieder im wesentlichen ungehindert im Beugungsabschnitt verteilen, und der Modulator wird undurchlässig.

Gemäß einer bevorzugten Variante erstreckt sich das erste Heizelement quer zur Signallaufrichtung nur über einen Teil der Breite des Beugungsabschnitts. Wenn bei einem solchen Modulator das erste Heizelement außer Betrieb geht, und das zweite Heizelement eine Brechungsindexdifferenz an der Grenze zwischen dem Wellenleiter und dem Beugungsabschnitt kompensiert, so bleibt dennoch an der vom Wellenleiter abgewandten Seite des ersten Heizelements eine Übergangszone bestehen, an der sich der Brechungsindex ändert, so daß vom Wellenleiter in den Beugungsabschnitt gestreutes Licht daran zurückgeworfen werden kann. Um dies zu vermeiden, ist zweckmäßigerweise an der vom zweiten Heizelement abgewandten Seite des ersten Heizelements ein drittes Heizelement vorgesehen, das betrieben werden kann, um auch in dieser Übergangszone eine Brechungsindexdifferenz zu kompensieren und Reflexion an dieser Grenzzone zu vermeiden.

Zweckmäßigerweise umfaßt der Modulator zusätzlich eine Treiberschaltung, die Signale zum Auf- und Abschalten des Modulators empfängt und die Heizelemente in geeigneter Weise mit Energie versorgt.

Weitere Merkmale und Vorteile der Erfindung ergeben sich aus der nachfolgenden Beschreibung von Ausführungsbeispielen mit Bezug auf die Figuren.

### Figuren

- Figur 1: zeigt eine Ansicht des thermooptischen Modulators von unten;
- Figur 2: einen Schnitt entlang der Linie II-II aus Figur 1; und
- Figur 3: den zeitlichen Verlauf eines Ansteuersignals und von Heizspannungen des Modulators.

### Beschreibung von Ausführungsbeispielen

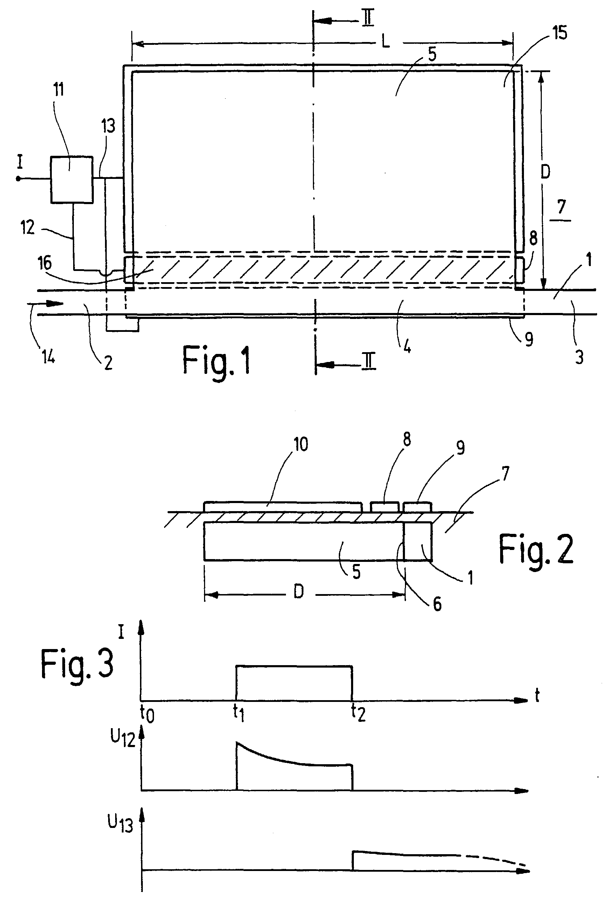

Der in Figur 1 gezeigte thermooptische Modulator umfaßt einen planaren Wellenleiter 1 mit einem Eingangsabschnitt 2, einem Ausgangsabschnitt 3 und einem zwischen diesen liegenden Schaltabschnitt 4. An den Schaltabschnitt 4 grenzt seitlich, in Figur 1 nach oben, ein Beugungsabschnitt 5 entlang einer mit den Rändern von Ein- und Ausgangsabschnitt 2,3 fluchtenden Grenze 6 (siehe Figur 2) an.

Der Wellenleiter 1 und der Beugungsabschnitt 5 sind aus einem Material mit einheitlichem Brechungsindex n₁ ausgebildet und in ein Substratmaterial 7 mit davon verschiedenem Brechungsindex n₂ eingebettet.

Ein erstes und ein zweites Heizelement 8,9 erstrecken sich beiderseits der Grenze 6 auf einem Teil der Breite des Beugungsabschnitts 5 beziehungsweise über dem Schaltabschnitt 4 des Wellenleiters 1. Die restliche Oberfläche des Schaltabschnitts 5 an der vom Wellenleiter 1 abgewandten Seite des ersten Heizelements 8 ist von einem dritten Heizelement 10 überdeckt. Diese Heizelemente können in bekannter Weise, zum Beispiel durch Aufdampfen oder Siebdruck, auf der Oberfläche des Substrats 7 erzeugt werden. Eine Treiberschaltung 11 hat einen Eingang 12 für ein Steuersignal I, welches angibt, ob der Modulator durchlässig sein oder sperren soll. In Abhängigkeit vom angegebenen Betriebszustand versorgt die Treiberschaltung die Heizelemente 8,9,10 mit Strom über Leitungen 12,13.

Die Breite des Wellenleiters 1 und des ersten und zweiten Heizelemente 8,9 parallel zur Substratoberfläche ist wenigstens in etwa gleich der Dicke des Wellenleiters 1 und des Beugungsabschnitts 5 senkrecht dazu. Wesentlich kleiner als diese Dicke darf die Breite nicht sein, da sonst Inhomogenitäten der Temperatur der Abschnitte 4,5 das Schaltverhalten des Modulators beeinträchtigen.

Figur 3 zeigt verschiedene Phasen des Betriebs des Modulators. In einer ersten Phase, zwischen den Zeitpunkten t₀ und t₁ hat das Steuersignal I den Wert 0, und der Modulator soll undurchlässig sein. Die Brechungsindizes der Abschnitte 2 bis 5 des Modulators sind gleich. Eine in Richtung des Pfeils 14 vom Eingangsabschnitt 2 des Wellenleiters geführte Mode beginnt daher mit ihrem Eintritt in den Schaltabschnitt 4, in den Beugungsabschnitt 5 hinein zu beugen, und verteilt sich darin. Länge L und Breite D des Beugungsabschnitts 5 können in Kenntnis der geführten Mode zum Beispiel so gewählt werden, daß diese sich im Beugungsabschnitt 5 schwerpunktmäßig in Richtung der dem Eingangsabschnitt 2 diagonal gegenüberliegenden Ecke 15 ausbreitet. So läßt sich eine effektive Dämpfung der Mode in einer Größenordnung von 35 dB erreichen.

Zum Zeitpunkt t₁ nimmt das Signal I einen nichtverschwindenden Pegel an, der angibt, daß der Modulator in den durchlässigen Zustand umgeschaltet werden soll. Die Treiberschaltung liefert daraufhin auf der Leitung 12 eine Versorgungsspannung U₁₂ für das erste Heizelement, deren Verlauf in Figur 3 gezeigt ist. Diese Spannung U₁₂ kann bei einer einfachen Ausgestaltung einen konstanten Wert haben, oder sie kann, wie hier dargestellt, zum Zeitpunkt t₁ mit einem hohen Pegel einsetzen, der zunächst eine schnelle Erwärmung des Grenzabschnitts 16 des Beugungsabschnitts 5 unterhalb des ersten Heizelements 8 auf eine gewünschte Arbeitstemperatur ermöglicht und anschließend auf einen Haltewert abklingen, der ausreicht, um den Grenzabschnitt auf der Arbeitstemperatur zu halten.

Die Erwärmung des Grenzabschnitts 16 führt zu einer Abnahme seines Brechungsindex und damit zu Totalreflexion der geführten Mode entlang der Grenze 6. Das Licht erreicht so im wesentlichen ungedämpft den Ausgangsabschnitt 3.

Zum Zeitpunkt t₂ kehrt das Signal I zurück auf den Wert 0. Die Treiberschaltung 11 hört auf, das erste Heizelement 8 mit Strom zu versorgen. Der unterhalb des ersten Heizelements 8 liegende Grenzabschnitt 16 des Beugungsabschnitts 5 kühlt durch Wärmediffusion in das Substratmaterial 7 schnell ab, sein Brechungsindex bleibt dennoch zunächst geringfügig kleiner als der des Schaltabschnitts 4. Um zu vermeiden, daß infolge von Restreflexion an der Grenze 6 weiterhin größere Mengen an Licht den Ausgangsabschnitt 3 erreichen, versorgt nun die Treiberschaltung 11 das zweite Heizelement 9 mit einer Heizspannung U₁₃. Die daraus resultierende Erwärmung des Schaltabschnitts 4 verringert dessen Brechungsindex soweit, daß er im wesentlichen gleich dem des Grenzabschnitts 16 unterhalb des ersten Heizelements 8 wird. Über den Eingabeabschnitt 2 eingespeistes Licht ist daher nicht mehr entlang der Grenze 6 geführt und kann ungehindert in den Beugungsabschnitt 5 streuen.

Die Heizspannung U₁₃ wird, gegebenenfalls mit allmählich abnehmendem Wert, aufrechterhalten, bis der Berechnungsindex des Grenzabschnitts wieder einen stationären Wert erreicht hat.

Um an der von dem Schaltabschnitt 4 abgewandten Seite des Grenzabschnitts 16 eine zweite Unstetigkeit des Brechungsindex zu vermeiden, wird das dritte Heizelement 10 ebenfalls mit der Spannung U₁₃ versorgt. So ergibt sich ein auf der gesamten Breite des Schaltabschnitts 4 und des Beugungsabschnitts 5 im wesentlichen homogener Brechungsindex, der zwar geringfügig kleiner ist als in der Zeit zwischen t₀ und t₁, der aber in gleicher Weise eine wirksame Streuung des Lichts in den Beugungsabschnitt 5 und somit eine wirksame Unterdrückung der Lichttransmission ermöglicht.

Einer Variante zufolge kann auf das dritte Heizelement 10 verzichtet werden, wenn stattdessen das erste Heizelement 8 sich über die gesamte Oberfläche des Beugungsabschnitts 5 erstreckt.

## Patentansprüche

1. Thermooptischer Modulator mit einem Wellenleiter (1), an den in einem Schaltabschnitt (4) quer zu seiner Signallaufrichtung (14) ein Beugungsabschnitt (5) angrenzt, mit einem sich am Beugungsabschnitt (5) entlang seiner Grenze (6) zum Wellenleiter (1) erstreckenden ersten Heizelement (8), **dadurch gekennzeichnet,** daß ein zweites Heizelement (9) sich entlang der Grenze (6) am Wellenleiter (1) erstreckt.

2. Thermooptischer Modulator nach Anspruch 1, **dadurch gekennzeichnet,** daß das erste Heizelement (8) sich quer zur Signallaufrichtung (14) über einen Teil der Breite (D) des Beugungsabschnitts (5) erstreckt und daß sich an der vom zweiten Heizelement (9) abgewandten Seite des ersten Heizelements (8) ein drittes Heizelement (10) anschließt.

3. Thermooptischer Modulator nach Anspruch 1 oder 2, **gekennzeichnet durch** eine Treiberschaltung (11), die bei Empfang eines Signals (I) zum Aufschalten des thermooptischen Modulators das erste Heizelement (8) in Betrieb nimmt und bei Empfang eines Signals (I) zum Abschalten des thermooptischen Modulators das erste Heizelement (8) außer Betrieb und das zweite (9) und gegebenenfalls dritte Heizelement (10) in Betrieb nimmt.

4. Thermooptischer Modulator nach Anspruch 3, **dadurch gekennzeichnet,** daß die Treiberschaltung (11) das zweite und gegebenenfalls das dritte Heizelement (8,9) nur für eine begrenzte Zeitspanne in Betrieb hält.

5. Thermooptischer Modulator nach einem der vorhergehenden Ansprüche**, dadurch gekennzeichnet,** daß das zweite und gegebenenfalls das dritte Heizelement (9,10) eine niedrigere Betriebstemperatur als das erste Heizelement (8) haben.
